# EUROPÄISCHE PATENTANMELDUNG

(11) **EP 4 738 405 A1**
(43) Veröffentlichungstag der Anmeldung: **06.05.2026**
(21) Anmeldenummer: 25210236.3
(22) Anmeldetag: 21.10.2025
(51) Int. Cl.: H01G 4/228, H01G 4/38, H01G 4/32, H01G 4/40

(54) **KONDENSATORMODUL**

(30) Priorität: 29.10.2024 DE 102024210426
(71) Anmelder: Volkswagen Aktiengesellschaft, 38440 Wolfsburg (DE)
(72) Erfinder: Schiedermeier, Maximilian, 38440 Wolfsburg (DE); Hartwig, Raphael, 38440 Wolfsburg (DE); Sommer, Christian, 38440 Wolfsburg (DE)

(57) **Zusammenfassung**

Die Erfindung betrifft ein Kondensatormodul (1), wobei das Kondensatormodul (1) eine Vielzahl von Kondensatoren als Wickel (2) aufweist, wobei die Wickel (2) jeweils an den Stirnseiten (3, 4) eine Elektrode aufweisen und die Mantelfläche (5) der Wickel (2) elektrisch isoliert ist, wobei die Wickel (2) in zwei Gruppen unterteilt sind, wobei das Kondensatormodul (1) ein erstes Kontaktteil (6), ein zweites Kontaktteil (7) und ein drittes Kontaktteil (8) aufweist, wobei das erste Kontaktteil (6) mit einer Elektrode jedes Wickels (2) verbunden ist, wobei das zweite Kontaktteil (7) mit den anderen Elektroden der ersten Gruppe der Wickel (2) und das dritte Kontaktteil (8) mit den anderen Elektroden der zweiten Gruppe der Wickel (2) verbunden ist.

## Beschreibung

Die Erfindung betrifft ein Kondensatormodul.

Kondensatormodule weisen eine Vielzahl von Kondensatoren auf, die häufig als Wickel ausgebildet sind. Dabei weisen die Wickel an ihren Stirnseiten Elektroden auf, über die diese von Kontaktteilen kontaktiert werden können, wobei die Mantelflächen der Wickel elektrisch isoliert sind. De Wickel können sehr kompakt in einer Reihe oder als Matrix angeordnet werden, wobei dann ein Kontaktteil die Elektroden der einen Stirnseite und ein anderes Kontaktteil die Elektroden der anderen Stirnseite kontaktieren kann, sodass die Wickel elektrisch parallel verbunden sind, sodass sich deren Kapazität addiert. Ein Anwendungsfall für ein solches Kondensatormodul ist ein Zwischenkreiskondensator eines Wechselrichters. In diesem Fall werden dann die Kontaktteile mit einem positiven und einem negativen Anschluss des Wechselrichters verbunden.

In verschiedenen Anwendungen benötigt man Reihenschaltungen von Kondensatoren mit einem Mittelabgriff, beispielsweise wenn der Zwischenkreiskondensator für einen 3-Level-Wechselrichter verwendet werden soll. Aber auch in anderen Schaltungskonfigurationen benötigt man Reihenschaltungen von Kondensatoren. Eine Lösung wäre, zwei bekannte Kondensatormodule in Reihe zu schalten.

Der Erfindung liegt das technische Problem zugrunde, ein kompaktes Kondensatormodul mit einem Mittelabgriff zu schaffen.

Die Lösung des technischen Problems ergibt sich durch ein Kondensatormodul mit den Merkmalen des Anspruchs 1. Weitere vorteilhafte Ausgestaltungen der Erfindung ergeben sich aus den Unteransprüchen.

Das Kondensatormodul weist eine Vielzahl von Wickeln auf, wobei die Wickel jeweils an den Stirnseiten Elektroden aufweisen und die Mantelfläche der Wickel elektrisch isoliert ist. Die Wickel sind in zwei Gruppen unterteilt. Weiter weist das Kondensatormodul ein erstes Kontaktteil, ein zweites Kontaktteil und ein drittes Kontaktteil auf, wobei das erste Kontaktteil mit einer Elektrode jedes Wickels verbunden ist. Das erste Kontaktteil bildet dabei den Mittelabgriff des Kondensatormoduls. Das zweite Kontaktteil ist mit den anderen Elektroden der ersten Gruppe der Wickel und das dritte Kontaktteil ist mit den anderen Elektroden der zweiten Gruppe verbunden. Hierdurch wird ein sehr kompakter Aufbau eines Kondensatormoduls mit Mittelabgriff möglich.

In einer Ausführungsform sind die Wickel in mindestens einer Reihe angeordnet, wobei innerhalb der Reihe die Wickel der ersten Gruppe und die Wickel der zweiten Gruppe alternierend angeordnet sind. Dabei ist auch ein paarweises oder tripleförmiges Alternieren möglich. Parallel zu der Reihe können weitere Reihen angeordnet sein, die alle gleich ausgebildet sind. Das zweite und dritte Kontaktteil kontaktieren die Elektroden von der Oberseite, wobei das zweite und dritte Kontaktteil kammförmige oder streifenförmige Kontaktstrukturen aufweisen, wobei an der Unterseite das erste Kontaktteil angeordnet ist. Oberseite und Unterseite können auch vertauscht werden und dienen hier nur zur Unterscheidung der Stirnseiten. Wichtig ist nur, dass das erste Kontaktteil von einer Seite alle Elektroden aller Wickel kontaktiert.

In einer alternativen Ausführungsform sind die Wickel in mindestens einer Reihe angeordnet, wobei die Wickel der ersten Gruppe in einem ersten Teil der Reihe und die Wickel der zweiten Gruppe in einem zweiten Teil der Reihe angeordnet sind, wobei an der Unterseite des Kondensatormoduls das erste Kontaktteil angeordnet ist, wobei das zweite Kontaktteil und das dritte Kontaktteil von der Oberseite die Elektroden der ihnen zugeordneten Wickel kontaktieren. Bezüglich Ober- und Unterseite gilt das zuvor Gesagte. Der Vorteil dieser Ausführungsform ist, dass die Wickel der ersten und zweiten Gruppe räumlich als Einheit angeordnet sind, sodass der Kontaktierungsvorgang vereinfacht ist, wobei jedoch die parasitären Induktivitäten etwas größer sind.

In einer weiteren alternativen Ausführungsform sind die Wickel der ersten Gruppe und die Wickel der zweiten Gruppe übereinander angeordnet, wobei das erste Kontaktteil zwischen den beiden Gruppen angeordnet ist, wobei das zweite Kontaktteil von der Oberseite und das dritte Kontaktteil von der Unterseite die Elektroden kontaktiert. Der Vorteil ist, dass das zweite und dritte Kontaktteil räumlich getrennt sind, sodass die Isolation zwischen den Potentialen vereinfacht ist. Dabei ist das Kondensatormodul höher, wobei jedoch das Bauvolumen ähnlich wie bei den anderen Ausführungsformen ist.

In einer weiteren Ausführungsform sind mindestens einzelne Kontaktteile plattenförmig oder schienenförmig ausgebildet. An den plattenförmigen Elementen können dann noch Abwinkelungen angeordnet sein.

Dabei können die plattenförmigen Elemente im Bereich der Elektroden der Wickel Löcher aufweisen, wobei z.B. an den Rändern der Löcher Kontaktfahnen angeordnet sind, die dann mit den Elektroden verlötet oder verschweißt werden können. Die Löcher können beispielsweise durch Bohrungen, Stanzungen oder Fräsungen erzeugt werden. Vorzugsweise sind die Löcher rund, was aber nicht zwingend ist.

In einer weiteren Ausführungsform weisen die Kontaktteile jeweils mindestens einen Abgriff auf, um so das Kondensatormodul einfacher mit anderen Elementen wie beispielsweise einen Wechselrichter und/oder anderen Filtern (z.B. EMV-Filter) zu verbinden.

In einer weiteren Ausführungsform ist das Kondensatormodul mit einer Vergussmasse (z.B. einer Moldmasse) vergossen, wobei die Abgriffe mindestens teilweise frei von Vergussmasse sind.

In einer weiteren Ausführungsform weisen das zweite Kontaktteil und/oder das dritte Kontaktteil jeweils mindestens zwei Abgriffe auf, sodass das Kondensatormodul mit mehreren Komponenten verbunden werden kann. Des Weiteren kann durch die mindestens zwei Abgriffe auch ein besseres induktives Verhalten eingestellt werden.

In einer weiteren Ausführungsform weist das Kondensatormodul weitere Kondensatoren auf, die mit einem Kontaktteil verbunden sind. Somit lassen sich beispielsweise Filterelemente in das Kondensatormodul integrieren.

Die Erfindung wird nachfolgend anhand bevorzugter Ausführungsbeispiele näher erläutert. Die Figuren zeigen:
- Fig. 1: eine perspektivische Darstellung eines Kondensatormoduls,
- Fig. 2: eine Explosionsdarstellung der Kontaktteile,
- Fig. 3: eine perspektivische Darstellung eines Kondensatormoduls in einer zweiten Ausführungsform und
- Fig. 4: eine perspektivische Darstellung eines Kondensatormoduls in einer dritten Ausführungsform.

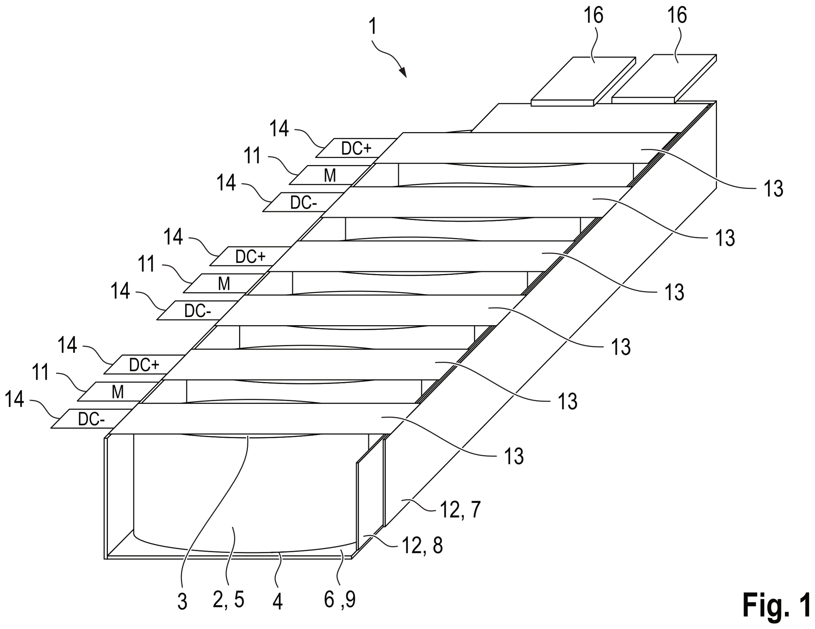

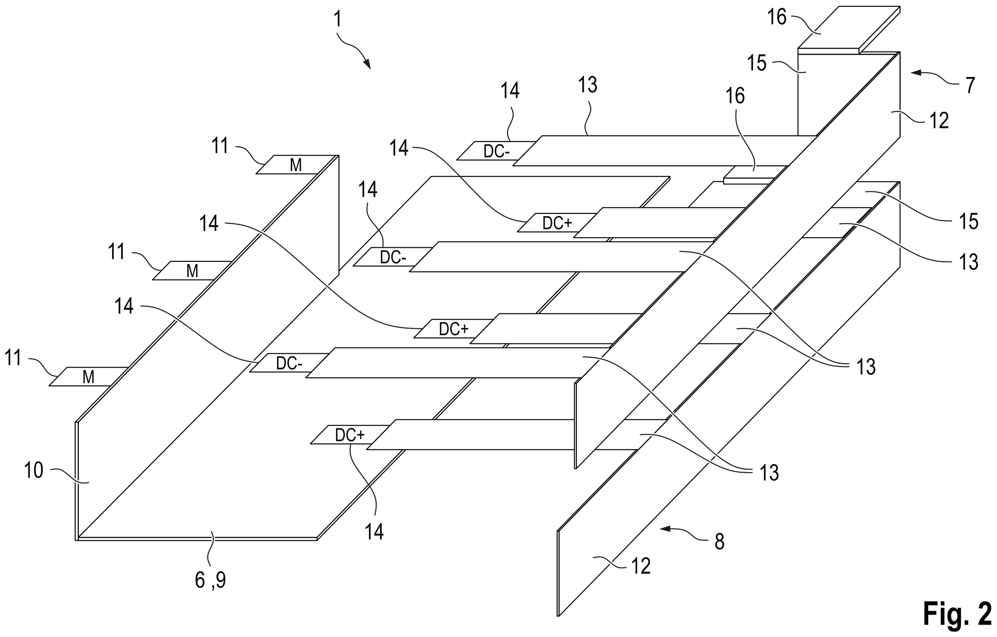

In der Fig. 1 ist ein Kondensatormodul 1 dargestellt, das sechs Wickel 2 als Kondensatoren aufweist. Die Wickel 2 sind in einer Reihe angeordnet, wobei die Wickel 2 jeweils an den Stirnseiten 3, 4 eine Elektrode aufweisen, wobei eine Mantelfläche 5 elektrisch isoliert ist. Dabei wird nachfolgend die Stirnseite 3 der Oberseite und die Stirnseite 4 der Unterseite zugeordnet, wobei die Bezeichnungen nur zur Orientierung dienen und der reale Einbau des Kondensatormoduls 1 auch anders sein kann. Die Wickel 2 sind in zwei Gruppen unterteilt. In einer Zählweise sind von vorne nach hinten der erste, dritte und fünfte Wickel 2 der ersten Gruppe und der zweite, vierte und sechste Wickel 2 der zweiten Gruppe zugeordnet. Weiter weist das Kondensatormodul 1 ein erstes Kontaktteil 6, ein zweites Kontaktteil 7 und ein drittes Kontaktteil 8 auf. Das erste Kontaktteil 6 weist ein plattenförmiges Element 9 und eine Abwinkelung 10 in Form einer weiteren Platte auf, die sich senkrecht von einer Kante des plattenförmigen Elements 9 erstreckt, wobei an der Abwinkelung 10 drei Abgriffe 11 abgehen, die parallel zum plattenförmigen Element 9 verlaufen (siehe auch Fig. 2). Die Wickel 2 sind dabei mit ihren Stirnseiten 4 auf dem plattenförmigen Element 9 angeordnet. Das zweite Kontaktteil 7 dient zum Kontaktieren der Elektroden der Stirnseite 3 der Wickel 2 der ersten Gruppe. Das zweite Kontaktteil 7 weist ein plattenförmiges Element 12 auf, von dem kammförmige Kontaktstrukturen 13 abgehen, die die Elektroden der Wickel 2 kontaktieren und an deren Ende drei Abgriffe 14 angeordnet sind.

Weiter weist das zweite Kontaktteil 7 eine Abwinkelung 15 auf, die senkrecht zu dem plattenförmigen Element 12 steht, an deren Oberseite ein weiterer Abgriff 16 angeordnet ist, der senkrecht zur Abwinkelung und parallel zu den kammförmigen Kontaktstrukturen 13 ist (siehe auch Fig. 2). Entsprechend ist auch das dritte Kontaktteil 8 ausgebildet, wobei die Elemente des dritten Kontaktteils 8 mit den gleichen Bezugszeichen wie für das zweite Kontaktteil 7 versehen sind. Über die Abgriffe 11, 14 kann das Kondensatormodul 1 beispielsweise mit einem Wechselrichter verbunden werden, wobei über die Abgriffe 16 das Kondensatormodul 1 mit einem EMV-Filter verbunden werden kann, der beispielsweise X- und Y-Kondensatoren und Induktivitäten aufweist.

Dabei sei angemerkt, dass das plattenförmige Element 9 nicht dargestellte Löcher ein Bereich der Elektroden der Winkel 2 aufweisen kann, wobei an den Rändern der Löcher dann Kontaktfahnen angeordnet sind. Die Kontaktfahnen können dann mit den Elektroden verlötet oder verschweißt werden.

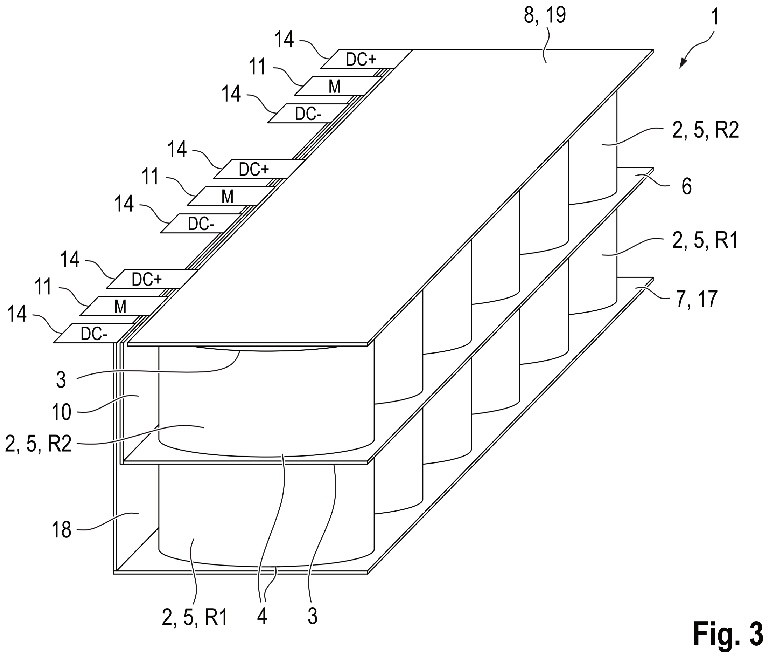

In der Fig. 3 ist eine alternative Ausführungsform für ein Kondensatormodul 1 dargestellt. Dabei sind die Wickel 2 der zwei Gruppen in zwei übereinander liegenden Reihen angeordnet. Die Wickel 2 der ersten Gruppe sind in einer ersten Reihe R1 angeordnet und die Wickel 2 der zweiten Gruppe sind in einer zweiten Reihe R2 angeordnet. Zwischen den zwei Reihen R1, R2 von Wickeln 2 ist das erste Kontaktteil 6 angeordnet, das ein plattenförmiges Element 9, eine Abwinkelung 10 und Abgriffe 11 aufweist. Dabei kontaktiert das erste Kontaktteil 6 mit seinem plattenförmigen Element 9 die Elektroden der Stirnseite 3 der ersten Reihe R1 von Wickeln 2 und die Elektroden der Stirnseite 4 der zweiten Reihe R2 von Wickeln 2. Das zweite Kontaktteil 7 weist ein plattenförmiges Element 17 und eine Abwinkelung 18 auf, an der die Abgriffe 14 abgehen, die parallel zu dem plattenförmigen Element 17 ausgerichtet sind. Das plattenförmige Element 17 kontaktiert die Elektroden der Stirnseite 4 der ersten Reihe R1 von Wickeln 2. Das dritte Kontaktteil 8 weist ebenfalls ein plattenförmiges Element 19 auf, von dem die Abgriffe 14 in der gleichen Ebene abgehen. Das plattenförmige Element 19 kontaktiert die Elektroden der Stirnseite 3 der Wickel 2 der zweiten Reihe R2. Die Wickel 2 müssen dabei nur auf die halbe Gesamtspannung des Kondensatormoduls 1 ausgelegt sein. Dabei können die Wickel 2 der ersten und zweiten Gruppe auch mehr als eine Reihe aufweisen und eine beliebige Matrixform aufweisen. Dabei sei angemerkt, dass auch bei dieser Ausführungsform Abgriffe 16 vorhanden sein können.

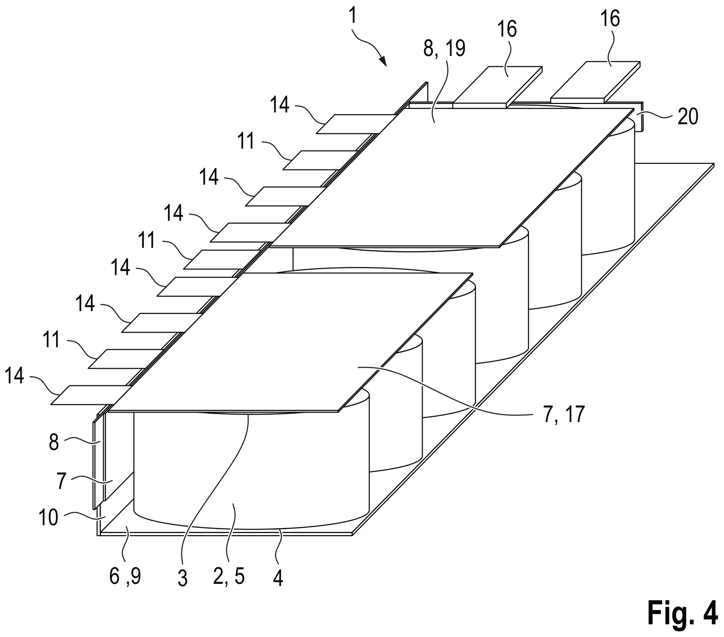

In der Fig. 4 ist eine weitere alternative Ausführungsform eines Kondensatormoduls 1 dargestellt. Dabei sind die Wickel 2 in einer Reihe angeordnet. Die ersten drei Wickel 2 der Reihe sind der ersten Gruppe zugeordnet und die letzten drei Wickel 2 der Reihe sind der zweiten Gruppe zugeordnet. Das erste Kontaktteil 6 kontaktiert wieder alle Elektroden der Stirnseite 4 an der Unterseite (wie bei der Ausführungsform gemäß Fig. 1). Das zweite Kontaktteil 7 und das dritte Kontaktteil 8 weisen jeweils ein plattenförmiges Element 17 bzw. 19 auf, das die Elektroden der Stirnseite 3 von der Oberseite kontaktiert. Dabei weist das zweite Kontaktteil 7 noch eine Abwicklung 20 auf, von der der Abgriff 16 abgeht. Auch bei dieser Ausführungsform können mehrere Reihen von Wickeln parallel angeordnet sein.

### Bezugszeichenliste

- 1: Kondensatormodul
- 2: Wickel
- 3: Stirnseite
- 4: Stirnseite
- 5: Mantelfläche
- 6: erstes Kontaktteil
- 7: zweites Kontaktteil
- 8: drittes Kontaktteil
- 9: plattenförmiges Element
- 10: Abwinkelung
- 11: Abgriff
- 12: plattenförmiges Element
- 13: kammförmige Kontaktstruktur
- 14: Abgriff
- 15: Abwinkelung
- 16: Abgriff
- 17: plattenförmiges Element
- 18: Abwinkelung
- 19: plattenförmiges Element
- 20: Abwinkelung
- R1, R2: Reihe

## Patentansprüche

1. Kondensatormodul (1), wobei das Kondensatormodul (1) eine Vielzahl von Kondensatoren als Wickel (2) aufweist, wobei die Wickel (2) jeweils an den Stirnseiten (3, 4) eine Elektrode aufweisen und die Mantelfläche (5) der Wickel (2) elektrisch isoliert ist, wobei die Wickel (2) in zwei Gruppen unterteilt sind, wobei das Kondensatormodul (1) ein erstes Kontaktteil (6), ein zweites Kontaktteil (7) und ein drittes Kontaktteil (8) aufweist, wobei das erste Kontaktteil (6) mit einer Elektrode jedes Wickels (2) verbunden ist, wobei das zweite Kontaktteil (7) mit den anderen Elektroden der ersten Gruppe der Wickel (2) und das dritte Kontaktteil (8) mit den anderen Elektroden der zweiten Gruppe der Wickel (2) verbunden ist.

2. Kondensatormodul nach Anspruch 1, **dadurch gekennzeichnet, dass** die Wickel (2) in mindestens einer Reihe angeordnet sind, wobei innerhalb der Reihe die Wickel (2) der ersten Gruppe und die Wickel der zweiten Gruppe alternierend angeordnet sind, wobei das zweite Kontaktteil (7) und das dritte Kontaktteil (8) von einer Oberseite des Kondensatormoduls (1) die Elektroden der Wickel (2) kontaktieren, wobei das zweite und dritte Kontaktteil (7, 8) kammförmige Kontaktstrukturen (13) oder streifenförmige Kontaktstrukturen aufweisen, wobei an der Unterseite das erste Kontaktteil (6) angeordnet ist.

3. Kondensatormodul nach Anspruch 1, **dadurch gekennzeichnet, dass** die Wickel (2) in mindestens einer Reihe angeordnet sind, wobei die Wickel (2) der ersten Gruppe in einem ersten Teil der Reihe und die Wickel (2) der zweiten Gruppe in einem zweiten Teil der Reihe angeordnet sind, wobei an der Unterseite des Kondensatormoduls (1) das erste Kontaktteil (6) angeordnet ist, wobei das zweite Kontaktteil (7) und das dritte Kontaktteil (8) von der Oberseite die Elektroden der ihnen zugeordneten Wickel (2) kontaktieren.

4. Kondensatormodul nach Anspruch 1, **dadurch gekennzeichnet, dass** die Wickel (2) der ersten Gruppe und die Wickel (2) der zweiten Gruppe übereinander angeordnet sind, wobei das erste Kontaktteil (6) zwischen den beiden Gruppen angeordnet ist, wobei das zweite Kontaktteil (7) von der Oberseite und das dritte Kontaktteil (8) von der Unterseite die Elektroden kontaktiert oder umgekehrt.

5. Kondensatormodul nach einem der vorangegangenen Ansprüche, **dadurch gekennzeichnet, dass** mindestens einzelne Kontaktteile (6-8) mindestens teilweise plattenförmig oder schienenförmig ausgebildet sind.

6. Kondensatormodul nach einem der vorangegangenen Ansprüche, **dadurch gekennzeichnet, dass** die Kontaktteile (6-8) jeweils mindestens einen Abgriff (11, 14; 16) aufweisen.

7. Kondensatormodul nach Anspruch 6, **dadurch gekennzeichnet, dass** das Kondensatormodul (1) mit einer Vergussmasse vergossen ist, wobei die Abgriffe (11, 14; 16) mindestens teilweise frei von Vergussmasse sind.

8. Kondensatormodul nach Anspruch 6 oder 7, **dadurch gekennzeichnet, dass** das zweite Kontaktteil (7) und/oder das dritte Kontaktteil (8) jeweils mindestens zwei Abgriffe (14, 16) aufweisen.

9. Kondensatormodul nach einem der vorangegangenen Ansprüche, **dadurch gekennzeichnet, dass** das Kondensatormodul (1) weitere Kondensatoren aufweist, die mit einem der Kontaktteile (6-8) verbunden sind.
